# EUROPÄISCHE PATENTANMELDUNG

(11) **EP 2 623 391 A2**
(43) Veröffentlichungstag der Anmeldung: **07.08.2013**
(21) Anmeldenummer: 13000480.7
(22) Anmeldetag: 31.01.2013
(51) Int. Cl.: B62B 3/00, B62B 3/02, B62B 5/00, B62B 5/08

(54) **Transportgerät zum Transport einer Golftasche und wenigstens einer Person**

(30) Priorität: 31.01.2012 DE 102012001719
(71) Anmelder: Nickel, Werner, 75210 Keltern (DE)
(72) Erfinder: Nickel, Werner, 75210 Keltern (DE)
(74) Vertreter: Reinhardt, Harry

(57) **Zusammenfassung**

Ein motorisches Transportgerät dient zum Transport einer Golftasche (1) und bedarfsweise einer Person. Es weist ein Fahrgestell mit mehreren an wenigstens zwei Achsen (19, 20) angeordneten Rädern (6, 18) auf, von denen wenigstens eines motorisch über eine an der hinteren Achse angeordnete Antriebseinheit antreibbar ist. Der Achsabstand der wenigstens zwei Achsen (19, 20) ist unter Veränderung der Länge des Fahrgestells verstellbar. Ferner besitzt es eine Lenkeinheit (3), einen abnehmbaren Sitz (2) für die Person und eine Steuereinrichtung zur Steuerung der Antriebseinheit. Das Transportgerät kann auch über eine räumlich veränderbare Bedieneinrichtung zum Bedienen des Transportgeräts durch eine das Transportgerät begleitende Person betätigt werden. Dadurch, dass das Fahrgestell durch ein Querrohr (22) für die hintere Achse (20) und wenigstens ein Rahmenrohr (14) mit einer gegenüber der Längserstreckung des Rahmenrohrs verstellbaren Verstelleinrichtung (5) gebildet ist, an deren vorderen Ende die Lenkeinheit (3) vorgesehen ist, und dass die Außenabmessungen des Transportgeräts im zusammengeklappten Zustand kleiner als 90 cm lang, 80 cm breit und 125 cm hoch ist, wird ein bedarfsweise kompakt zusammenlegbares Transportgerät geschaffen, das auch verschiedene Bedienarten sicher gewährleistet.

## Beschreibung

### Gebiet der Erfindung

Die Erfindung betrifft ein motorisches Transportgerät zum Transport einer Golftasche und bedarfsweise von wenigstens einer Person nach dem Oberbegriff des Anspruches 1.

### Stand der Technik

Das Golfspiel soll grundsätzlich ein erholsames Spiel sein und dient darüber hinaus durch Bewegung entlang größerer Wegstrecken auch der Körperertüchtigung. Üblicherweise wird ein Golfspiel über 18 Loch gespielt und dabei eine Wegstrecke von etwa 8 km zurückgelegt. Golf spielen Spieler unterschiedlichen Alters und unterschiedlicher Kondition. Insbesondere ältere Spieler haben oft das Problem, dass sie aus gesundheitlichen Gründen nur noch 9 Löcher gehen können, obwohl sie gerne 18 Loch spielen würden. Diese Spieler benützen häufig einen Golf Cart, um überhaupt 18 Loch spielen zu können. Die körperliche Ertüchtigung durch das Gehen im Gelände ist dann aber nicht mehr im gleichen Umfang vorhanden und befriedigt die Spieler nicht.

Aus der DE 20 2009 013 273 U1 ist ein dem Oberbegriff des Anspruches 1 zu Grunde liegendes elektrisch betriebenes, fahrbares für den Golfsport bekannt, bei dem zwei Teilabschnitte einer Plattform in Längsrichtung des Fahrzeugs verstellbar sind. Auf dieser Plattform ist im vorderen Teil an der Lenksäule eine Abstützung für die Golftasche vorgesehen. Die Ausgestaltung mittels einer Plattform hat Konsequenzen für den kompakten Aufbau des Transportgeräts, da die Räder nur an den Außenseiten der Plattform angebracht werden können und insofern die Außenmaße bestimmen. Zwar sind alle Elemente zusammenschiebbar oder klappbar angebracht, jedoch kann das Transportgerät nicht weiter optimiert werden, da innerhalb der Plattform kein Raum für die Räder besteht. Bei derartigen Geräten ist es zudem von Bedeutung, dass der Schwerpunkt bei allen Bedienarten sicher innerhalb der Außenabmessungen des Transportgeräts bleibt, um ein Kippen mit und ohne Golftasche als auch mit und ohne Person sicherzustellen, also auch dann, wenn die Person das Transportgerät zu Fuß begleitet. Sowohl zu einer Minimierung der Abmessungen als auch hinsichtlich einer Schwerpunktoptimierung schweigt sich die DE 20 2009 013 276 U1 aus. Dies wird insbesondere hinsichtlich des Sitzes deutlich, der gemäß Absatz 0023 mit einem Scherenhubmechanismus so angeordnet sein soll, dass er zwischen den Platten aufgenommen werden kann. Haben aber die Plattformen eine unterschiedliche Höhe, trägt dies auch bereits wieder zu einer Schwerpunktverlagerung bei.

Aus der DE 299 17 985 U1 ist ein elektrisch betriebenes Transportgerät für Personen auf Golfplätzen bekannt, das einen abnehmbaren Sitz aufweist und bedarfsweise zerlegbar ist. Es soll einerseits nur dem Transport der Golftasche wie bei einem Golf Caddy dienen, kann aber auch dem Transport von Spieler und Tasche dienen wie bei einem Golf Cart. Aus diesem Dokument erschließt sich nicht, wie genau auf dem dreirädrigen Transportgerät die Golftasche transportiert wird und wie genau das Transportgerät zerlegt wird.

Aus der US 2003/0132047 A1 ist ein dreirädriger Golf Caddy bekannt, der elektrisch betrieben und selbstfahrend ausgebildet ist. Er kann mit einem Sicherungsriegel am Benutzer angekoppelt werden, so dass er zwar selbst fährt, jedoch stehen bleibt, sobald der Sicherungsriegel gezogen wird. Die Golftasche kann am Caddy befestigt werden und bedarfsweise kann ein abnehmbarer Sitz am Rahmen des Caddys befestigt werden, der benutzt werden kann, wenn das Gefährt steht. Ein Mitfahren auf dem Caddy ist ebenso wenig vorgesehen wie eine Zerlegbarkeit.

Aus der WO 2009/135317 A1 ist ein selbstfahrender Golf-Caddy bekannt, wobei die Golftasche unter einem Sitz angeordnet wird, der wie ein Sattel über der Golftasche thront. Ziel der dortigen Erfindung ist im Wesentlichen die Steigerung des Komforts eines derartigen Geräts durch Einsatz von Dämpfungselementen. Die Zerlegbarkeit steht nicht zur Diskussion.

### Aufgabe der Erfindung

Ausgehend von diesem Stand der Technik liegt der vorliegenden Erfindung die Aufgabe zugrunde, ein bedarfsweise kompakt zusammenlegbares Transportgerät zu schaffen, das auch verschiedene Bedienarten sicher gewährleistet.

Diese Aufgabe wird auch durch ein motorisches Transportgerät mit den Merkmalen des Anspruches 1 gelöst.

Der Achsabstand der wenigstens zwei Achsen des Transportgeräts ist dabei verstellbar, so dass sich die Abmessungen einerseits deutlich reduzieren lassen, anderseits aber im Betrieb eine ausreichende Stabilität gewährleistet ist. Dabei kann auf dem Transportgerät wie bei einem Golf-Caddy nur die Tasche transportiert werden kann oder es kann auch bedarfsweise gefahren werden. Um das Transportgerät auch dann bedienen zu können, wenn der Golfspieler neben dem Gerät her läuft, ist eine Bedieneinrichtung vorgesehen, die bedarfsweise ebenfalls kompakt am Gerät gelagert werden kann. Das Fahrgestell wird durch ein Querrohr für die hintere Achse und wenigstens ein Rahmenrohr mit einer gegenüber der Längserstreckung des Rahmenrohrs verstellbaren Verstelleinrichtung strukturell einfach und auf das Wesentliche minimiert. Der Spieler kann also eine beliebige Wegstecke gehen oder auch auf dem Transportgerät sitzend fahren. Das Fahrgestell hat damit beim Fahren einen weiter vorne liegenden Schwerpunkt, kann aber zum Laufen neben den Transportgerät, so verändert werden, dass sich ein tiefer Schwerpunkt im Bereich der der hinteren Achse ergibt. Je nach körperlicher Verfassung kann der Spieler damit selbst bestimmen, wie viele "Löcher" er läuft oder fährt. Dadurch wird der Ansporn zum Golf Spielen positiv beeinflusst und die Spielfreude wesentlich erhöht. Dabei können die Teile des Gerätes so zusammengelegt werden, dass das Fahrgestell nach dem Spiel ohne wesentliche Umbauten in eine üblicherweise vorhandene Caddy-Box mit einer Tiefe von etwa 90 cm geparkt werden kann.

Vorzugsweise ist die Bedieneinrichtung zum Bedienen des Transportgeräts durch eine das Transportgerät begleitende Person am hinteren Ende des Transportgeräts im Bereich des Querrohrs abgestützt und vorzugsweise als eine Deichsel ausgebildet. Im gebrauchszustand kann das Transportgerät wie ein Golf-Caddy auf den beiden Hinterrädern rollend betätigt werden, indem über die Deichsel das Vorderrad angehoben wird da die wesentlichen Bauteile im Bereich der Hinterachse angeordnet sind ist dies problemlos und sicher möglich. Bedarfsweise kann auch bei dieser Bedienart der motorische Antrieb zugeschaltet werden.

Der Antrieb erfolgt vorzugsweise über einen auf die Antriebsräder wirkenden Motor oder über Naben- oder Getriebemotoren, die an den Antriebsrädern angreifen. In diesem Fall können die Antriebsräder getrennt auch zur Lenkung angesteuert werden, so dass dann das wenigstens eine weitere Rad lediglich als Lenkrolle mit einem Freiheitsgrad von 360° ausgebildet ist. Diese Anordnung trägt ebenfalls zu dem gewünschten tiefen Schwerpunkt bei.

Die Golftasche ist grundsätzlich auf dem Transportgerät angeordnet. Ist es jedoch erforderlich, auf dem Gerät auch zu fahren, kann sie seitlich oder nach hinten mitsamt ihrer Halterung etwas ausgerückt werden, so dass ein entsprechender Freiraum für den Fahrer geschaffen wird. Gleichzeitig wird dadurch eine entsprechende Fahrstabilität durch eine nahezu mittige Schwerpunktbelastung gewährleistet. Beim Einbringen in die Caddy-Box kann die Golftasche auf dem Transportgerät verbleiben.

Sowohl die Lenkeinheit als auch die Deichsel für die Bedienungseinheit, die ein Betätigen des Transportgerätes im Gehen gestattet, sind zusammenklappbar ausgebildet.

Eine Steuereinheit zur Betätigung des Transportgeräts ist sowohl im Bereich der Deichsel als auch an der Lenkstange vorhanden, so dass die Bedienbarkeit stets gewährleistet ist. Bedarfsweise können die Räder noch abgenommen werden, um die Abmessung weiter zu verringern, so dass das Transportgerät problemlos im Kofferraum eines Fahrzeuges aufgenommen werden kann.

Weitere Vorteile ergeben sich aus den Unteransprüchen und der nachfolgenden Beschreibung eines bevorzugten Ausführungsbeispiels.

### Kurzbeschreibung der Figuren

Im Folgenden wird die Erfindung anhand eines in den Figuren dargestellten Ausführungsbeispiels näher erläutert. Es zeigen:
- Fig. 1: eine perspektivische Ansicht eines motorischen Transportgeräts wie eines Golf-Caddys mit einer darauf angeordneten Golftasche,
- Fig. 2: eine Ansicht des Transportgeräts gemäß Fig. 1 von hinten mit eingeschwenkter Golftasche,
- Fig. 3: eine Draufsicht auf das Transportgerät gemäß Fig. 1,
- Fig. 4: eine Seitenansicht des Transportgeräts gemäß Fig. 1 mit gestrichelt angedeuteter zurückgesetzter Lenksäule,
- Fig. 5: eine Ansicht des Transportgeräts gemäß Fig. 2 mit ausgeschwenkter Golftasche mit Platz zur Schaffung des Freiraumes für den Fahrer,
- Fig. 6: eine Draufsicht auf das Transportgerät gemäß Fig. 4,
- Fig. 7: eine Seitenansicht des Transportgerätes im zusammengeklappten Zustand zum Transport in einem Fahrzeug.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

Die Figuren zeigen ein motorisches Transportgerät zum Transport einer Golftasche 1 und bedarfsweise von wenigstens einer Person auf einem abnehmbaren Sitz 2. Je nach Ausstattung können auch mehrere Personen mit dem Transportgerät transportiert werden. Das Transportgerät weist mehrere an wenigstens zwei Achsen 19, 20 angeordnete Räder 6, 18 auf, von denen wenigstens eines motorisch über eine zeichnerisch nicht dargestellte Antriebseinheit wie z.B. einen Elektromotor antreibbar ist. Eine Lenkeinheit 3 dient zum Lenken wenigstens eines der Räder und zwar im Ausführungsbeispiel des an der vorderen Achse 19 angeordneten Steuerrads 6. Es versteht sich von selbst, dass auch mehr als drei Räder, d.h. mehr als die zwei hinteren Antriebsräder an der hinteren Achse 20 und das Steuerrad 6 vorgesehen sein können. Die Antriebseinheit ist über eine Steuereinrichtung 21 zu steuern.

Das Fahrgestell wird durch ein Querrohr 22 für die hintere Achse 20 und wenigstens ein Rahmenrohr 14 mit einer gegenüber der Längserstreckung des Rahmenrohrs verstellbaren Verstelleinrichtung 5 strukturell einfach und auf das Wesentliche minimiert. Anstelle eines Rahmenrohrs 14 können auch mehrere Rahmenrohre vorgesehen sein, sofern die gewünschte Schwerpunktoptimierung in Verbindung mit den weiteren Teilen des Transportgeräts wie z.B. auch des Sitzes 2 gewährleistet ist. Dabei können die Teile des Gerätes so zusammengelegt werden, dass das Fahrgestell nach dem Spiel ohne wesentliche Umbauten in eine üblicherweise vorhandene Caddy-Box mit einer Tiefe von etwa 90 cm geparkt werden kann.

Die Bedieneinrichtung zum Bedienen des Transportgeräts durch eine das Transportgerät begleitende Person ist am hinteren Ende des Transportgeräts im Bereich des Querrohrs abgestützt und vorzugsweise als eine Deichsel 7 ausgebildet. Im gebrauchszustand kann das Transportgerät wie ein Golf-Caddy auf den beiden Hinterrädern 18 rollend betätigt werden, indem über die Deichsel 7 das Vorderrad 6 angehoben wird. da die wesentlichen Bauteile im Bereich der Hinterachse 20 angeordnet sind ist dies problemlos und sicher möglich. Bedarfsweise kann auch bei dieser Bedienart der motorische Antrieb zugeschaltet werden.

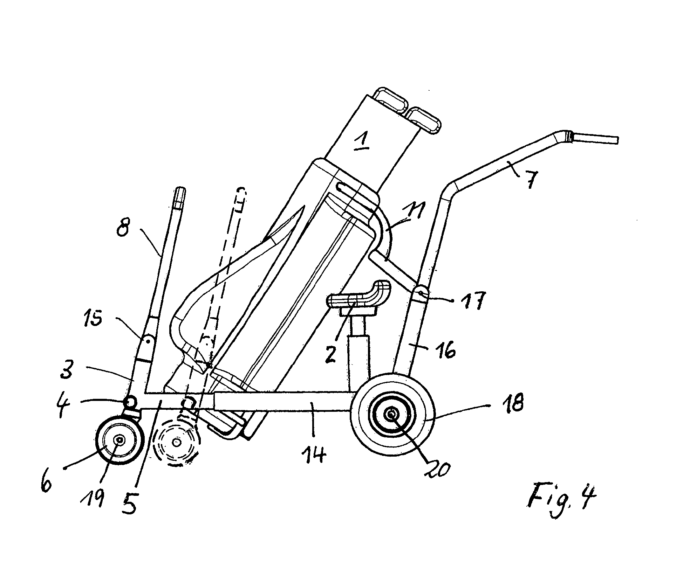

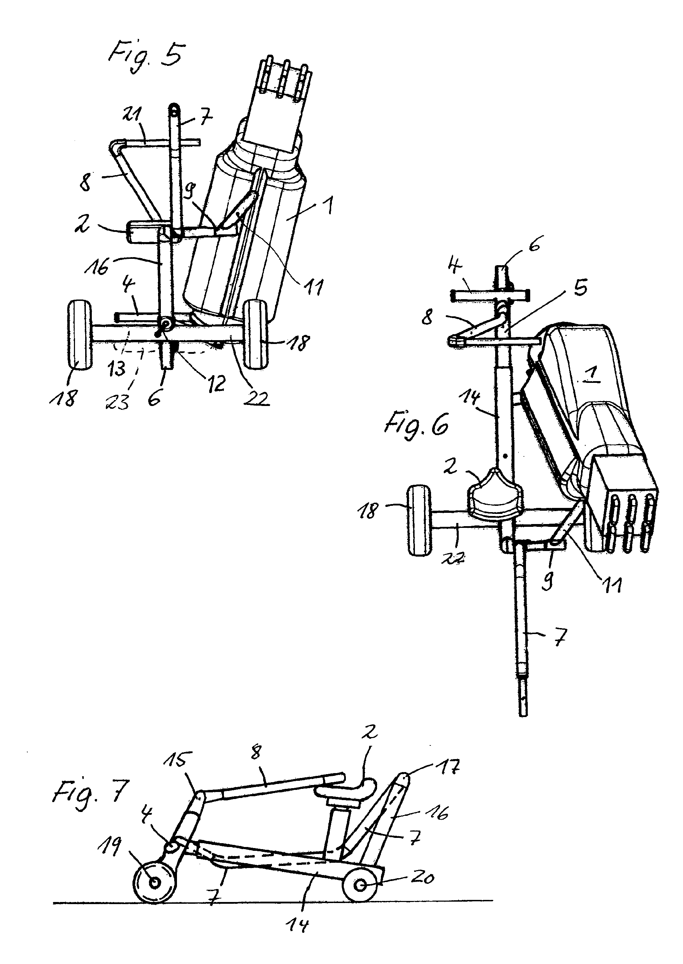

Der Achsabstand der wenigstens zwei Achsen 19, 20 ist gemäß Fig. 4 verstellbar, so dass bereits dadurch die Längenabmessungen des Geräts verringert werden können, gleichzeitig aber beim Betrieb eine ausreichende Stabilität durch den verlängerten Achsabstand erreicht ist. Zum Bedienen des Transportgeräts durch eine das Transportgerät begleitende Person, d.h. wenn der Golfspieler neben dem Transportgerät läuft, ist eine Bedieneinrichtung vorgesehen die ebenfalls räumlich veränderbar ist. Diese Bedieneinrichtung ist durch die aus einem Ruhezustand gemäß Fig. 7 in den ausgeklappten Gebrauchszustand überführbare Deichsel 7 gebildet, an der auch entsprechende Steuerelemente der Steuereinrichtung 21 vorgesehen sein können.

Im Ausführungsführungsbeispiel weist eine hintere Achse 20 als Antriebsachse zwei Räder 18 und die vordere Achse 19 das wenigstens eine Rad als Steuerrad 6 auf. Dabei kann entweder die Antriebsachse von der Antriebseinheit angetrieben werden, so dass das wenigstens eine Steuerrad 6 von der Lenkeinheit 3 mittels Lenksäule bzw. Lenkstange 8 lenkbar ist. Der Antrieb erfolgt vorzugsweise als Hinterachsantrieb über einen von einer Batterie 13 mit Energie versorgten Antriebsmotor. Er kann durch einen oder zwei beidseitig angeordnete Getriebemotoren erfolgen. Ebenso können jedoch die Antriebsräder getrennt von zwei Antriebseinheiten, wie zum Beispiel Naben- oder Getriebemotoren zur Lenkung angesteuert werden, wobei das Steuerrad 6 dann als Lenkrolle mit einem Freiheitsgrad von 360° ausgebildet ist. Im letzteren Fall wird die Steuereinrichtung 21 z.B. durch einen Joystick gebildet.

Das Transportgerät dient zum Transport einer Golftasche 1. Es kann sowohl durch eine hinter dem Transportgerät gehende Person über die Bedieneinrichtung oder einen auf dem Sitz 2 sitzenden Fahrer bedient werden. In der Sitzposition kann die Golftasche 1 seitlich oder nach hinten verschoben werden, um mehr Platz für den Fahrer zu schaffen und dadurch gleichzeitig den Schwerpunkt des Transportgeräts für die jeweilige Bedienart zu optimieren.

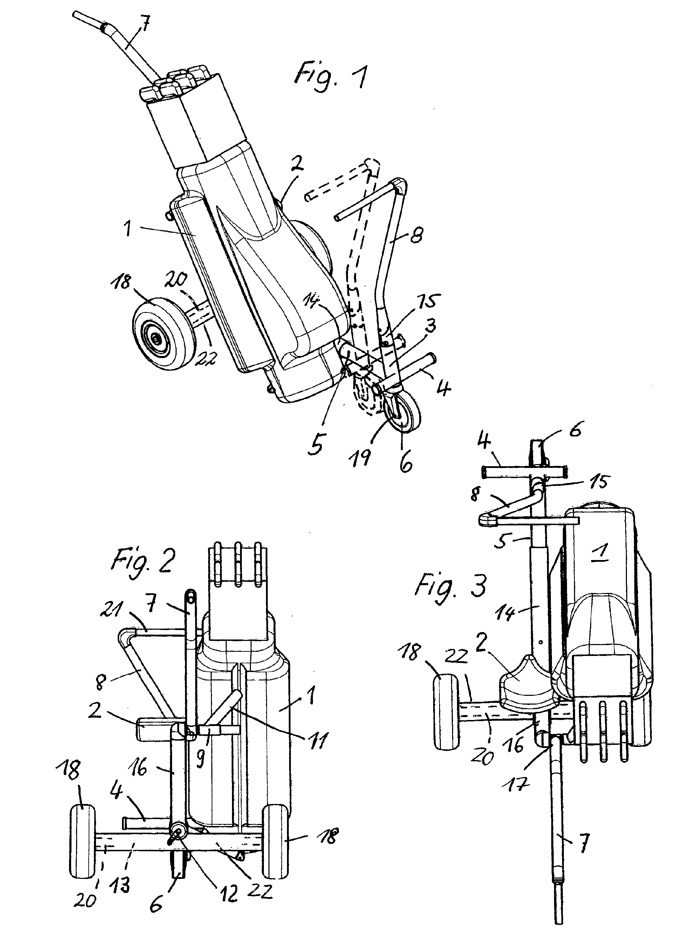

Die am vorderen Ende des Transportgerätes angebrachte Lenkeinheit 3 weist Fußraster 4 für die Füße des Fahrers auf. Diese Lenkeinheit kann durch die in Fig. 2 dargestellte Handkurbel 12 oder auch motorisch z.B. mittels eines Getriebemotors aus der Gebrauchsposition in die in Fig. 4 gestrichelt dargestellte Stellung zurückgefahren werden. Die Verstelleinrichtung 5 ist im Rahmenrohr 14 verdrehsicher gelagert und wird vorzugsweise mittels einer Gewindespindel verstellt. Sie ermöglicht eine Reduzierung der Gesamtlänge auf z.B. 860 mm, was ein Einstellen in eine übliche Caddy-Box ermöglicht.

Vorzugsweise wird bei Benutzung des Transportgeräts im Gehen das Steuerrad 6 fixiert. Dann kann das Transportgerät über die hintere Deichsel 7 bedient und das Steuerrad 6 durch Betätigen der Deichsel 7 vom Untergrund abgehoben werden, so dass über die beiden Räder 18 eine Bewegung wie bei einem Golf-Caddy möglich ist. da die Antriebseinheit an der hinteren Achse angeordnet ist und vorzugsweise auch der Motor 23 (gestrichelt in Fig. 5 angedeutet) z.B. als Nabenmotor ausgebildet ist, kann dieser im Bereich der Hinterachse so vom Schwerpunkt her optimiert angeordnet werden, dass er nicht nur die Bedienart als Golf-Caddy erleichtert, sondern mit seinem Gewicht auch zuverlässig stabilisiert. Bedarfsweise kann der Motor auch bei dieser Bedienart zugeschaltet werden.

Fig. 2 zeigt das Transportgerät von hinten, wobei die Golftaschenhalterung 11 innenliegend angeordnet ist. Die Golftaschenhalterung 11 ist an einer verschiebbaren Stütze 9 befestigt, die sich etwa in Höhe des Gelenks 17 zum Einklappen der Deichsel 7 befindet. Die Golftasche 1 ist an der Golftaschenhalterung 11 fixiert und kann aus der Position gemäß Fig. 2 in die Position gemäß Fig. 5 überführt werden, in der die Golftasche seitlich verschwenkt bzw. ausgeschwenkt ist. Alternativ kann sie bei entsprechender Anordnung der Stütze, er Lagerung für die Stütze oder der Golftaschenhalterung auch nach hinten verschoben werden. In dieser Position ergibt sich damit ein entsprechend größerer Freiraum für den Fahrer auf dem Sitz 2 und eine Schwerpunktoptimierung für die jeweilige Betriebsart. Fig. 2 zeigt ebenfalls die Handkurbel 12 zum Verstellen der Verstelleinrichtung 5. Die Verstelleinrichtung 5 ist gemäß Fig. 4 wenigstens ein teleskopierbares Rohr, an dessen vorderem Ende die Lenkeinheit 3 mit Lenkstange 8 und Fußraster 4 angeordnet sind. Es können jedoch auch mehrere Rohre oder andere Tragelemente vorgesehen sein, die zur Änderung des Achsabstands verstellbar sind.

Die Lenkstange 8 ist im Gelenk 15 aus der Gebrauchsposition in eine Ruheposition überführbar. Sie kann zudem durch eine Arretierung für den Geradeauslauf im Gehbetrieb festgesetzt werden. Der Sitz 2 ist in der Höhe verstellbar. Das hintere Halterohr 16 dient zur Anbindung der Deichsel 7 und der verschiebbaren Stütze 9, an der die Golftaschenhalterung 11 angebracht ist. das Halterohr 16 ist seinerseits am Querrohr 22 abgestützt. Die Stütze 9 kann manuell verschoben und arretiert werden.

Die Deichsel 7 ist um das Gelenk 17 schwenkbar und stufenlos oder schrittweise arretierbar. Die Antriebsräder 18 als auch das Stellrad 6 sind vorzugsweise Luft bereift und ohne Einsatz eines Werkzeugs abnehmbar. Dadurch kann die Gesamthöhe nochmals weiter reduziert werden, so dass das Transportgerät auch in einem üblichen Kofferraum z.B. eines Personenkraftwagens transportiert werden kann, wenn es sich in einer Position gemäß Fig. 7 befindet. In dieser Position ist dann auch die Lenkeinheit 3 eingeklappt, was zur Lagerung in einer üblichen Caddy-Box nicht unbedingt erforderlich ist.

Fig. 5 zeigt das Transportgerät von hinten in der Fahrposition, d.h. zur Benutzung durch einen Fahrer, mit seitlich ausgeschwenkter Golftasche 1. Das stufenlose Verschieben der Golftasche erfolgt durch die Golftaschenhalterung 11, die durch Klemmen oder Arretierbolzen fixiert werden kann. Durch diese Verschiebung ergibt sich der in Fig. 6 deutlich erkennbare Freiraum für den Fahrer.

Der verstellbare Sitz 2 befindet sich zwischen der hinteren Achse 20 und der Lenkeinheit 3 und damit im Schwerpunkt, um eine entsprechende Kippsicherheit zu gewährleisten. Die Golftasche 1 befindet sich neben dem Sitz 2 schrägliegend und wie bereits erläutert seitlich oder nach hinten verschiebbar. Die Deichsel 7 ist am hinteren Ende des Transportgerätes im Bereich der hinteren Achse 20 vorzugsweise am Querrohr 22 abgestützt. Die Bedieneinrichtung ist zusätzlich zur Lenkeinheit 3 vorgesehen. Eine Steuereinrichtung 21 kann an der Lenksäule und/oder der Bedieneinrichtung vorgesehen sein.

Die Abmessungen des Transportgerätes sind im zusammengeklappten Zustand kleiner als die Innenmaße einer üblichen Caddy-Box, die etwa 90 cm tief, 80 cm breit und 125 cm hoch ist. Dabei kann die Golftasche auf dem Transportgerät verbleiben. Das Transportgerät muss also weder für die Lagerung in einer Caddy-Box noch zum Transport im Kofferraum eines Pkws zerlegt werden, es genügt, dass es zusammengeklappt, also zusammenlegbar ist.

### Bezugszeichenliste

- 1: Golftasche
- 2: Sitz
- 3: Lenkeinheit
- 4: Fußraster
- 5: Verstelleinrichtung
- 6: Steuerrad
- 7: Deichsel
- 8: Lenkstange
- 9: verschiebbare Stütze
- 11: Golftaschenhalterung
- 12: Handkurbel
- 13: Batterie
- 14: Rahmenrohr
- 15: Gelenk
- 16: hinteres Halterohr
- 17: Gelenk
- 18: Antriebsräder
- 19, 20: Achse
- 21: Steuereinrichtung
- 22: Querrohr
- 23: Motor

## Patentansprüche

1. Motorisches Transportgerät zum Transport einer Golftasche (1) und bedarfsweise von wenigstens einer Person mit
- einem Fahrgestell mit wenigstens zwei Achsen (19,20),
- mehreren an den wenigstens zwei Achsen (19, 20) angeordneten Rädern (6, 18), von denen wenigstens eines motorisch über eine an der hinteren Achse (20) angeordnete Antriebseinheit antreibbar ist, wobei der Achsabstand der wenigstens zwei Achsen (19, 20) unter Veränderung der Länge des Fahrgestells verstellbar ist,
- einer Lenkeinheit (3) zum Lenken wenigstens eines der Räder (6) als Steuerrad,
- einem abnehmbaren Sitz (2) für die wenigstens eine Person,
- einer Steuereinrichtung (21) zur Steuerung der Antriebseinheit,
- einer räumlich veränderbaren Bedieneinrichtung zum Bedienen des Transportgeräts durch eine das Transportgerät begleitende Person,
**dadurch gekennzeichnet, dass** das Fahrgestell durch ein Querrohr (22) für die hintere Achse (20) und wenigstens ein Rahmenrohr (14) mit einer gegenüber der Längserstreckung des Rahmenrohrs verstellbaren Verstelleinrichtung (5) gebildet ist, an deren vorderen Ende die Lenkeinheit (3) vorgesehen ist, und dass die Außenabmessungen des Transportgeräts im zusammengeklappten Zustand kleiner als 90 cm lang, 80 cm breit und 125 cm hoch ist.

2. Transportgerät nach Anspruch 1, **dadurch gekennzeichnet, dass** die Bedieneinrichtung am hinteren Ende des Transportgeräts im Bereich des Querrohrs (22) abgestützt ist.

3. Transportgerät nach Anspruch 1 oder 2, **dadurch gekennzeichnet, dass** die hintere Achse (20) eine Antriebsachse mit zwei Rädern (18) als Antriebsrädern ist und dass eine vordere Achse (19) das wenigstens eine Rad (6) als Steuerrad aufweist.

4. Transportgerät nach Anspruch 3, **dadurch gekennzeichnet, dass** die Antriebsachse von der Antriebseinheit angetrieben wird und das wenigstens eine Steuerrad von der Lenkeinheit (3) mittels Lenksäule lenkbar ist oder dass die Antriebsräder getrennt von Antriebseinheiten zur Lenkung ansteuerbar sind, wobei dann das Steuerrad als Lenkrolle mit einem Freiheitsgrad von 360° ausgebildet ist.

5. Transportgerät nach Anspruch 4, **dadurch gekennzeichnet, dass** die Steuereinrichtung bei mehreren Antriebseinheiten durch einen Joystick gebildet ist.

6. Transportgerät nach einem der vorhergehenden Ansprüche. **dadurch gekennzeichnet, dass** der Achsabstand manuell z.B. über eine Handkurbel (12) oder motorisch verstellbar ist.

7. Transportgerät nach einem der vorhergehenden Ansprüche, **dadurch gekennzeichnet, dass** der verstellbare Sitz (2) zwischen der hinteren Achse (20) und der Lenkeinheit (3) angeordnet ist.

8. Transportgerät nach einem der vorhergehenden Ansprüche, **dadurch gekennzeichnet, dass** die Golftasche (1) zum Transport neben oder hinter dem Sitz (2) schräg liegend angeordnet ist.

9. Transportgerät nach Anspruch 8, **dadurch gekennzeichnet, dass** die Golftasche (1) auf einer Golftaschenhalterung (11) seitlich oder nach hinten verschiebbar angeordnet ist.

10. Transportgerät nach einem der vorhergehenden Ansprüche, **dadurch gekennzeichnet, dass** die Bedieneinrichtung durch eine aus einem eingeklappten Ruhezustand in einen ausgeklappten Gebrauchszustand überführbare Deichsel (7) gebildet ist.

11. Transportgerät nach einem der vorhergehenden Ansprüche, **dadurch gekennzeichnet, dass** die Lenkeinheit (3) eine aus einem eingeklappten Ruhezustand in einen ausgeklappten Gebrauchszustand überführbare vordere Lenkstange (8) aufweist.

12. Transportgerät nach einem der vorhergehenden Ansprüche, **dadurch gekennzeichnet, dass** die Bedieneinrichtung zusätzlich zur Lenkeinheit (3) vorgesehen ist.

13. Transportgerät nach einem der vorhergehenden Ansprüche, **dadurch gekennzeichnet, dass** die Außenabmessungen des Transportgeräts im zusammengeklappten Zustand kleiner als die Innenmaße einer üblichen Caddy-Box sind, die etwa 90 cm tief, 80 cm breit und 125 cm hoch ist.

14. Transportgerät nach einem der vorhergehenden Ansprüche, **dadurch gekennzeichnet, dass** die Steuereinrichtung an der Lenksäule und/oder an der Bedieneinrichtung vorgesehen ist.
